# EUROPEAN PATENT APPLICATION

(11) **EP 4 711 267 A1**
(43) Date of publication of application: **18.03.2026**
(21) Application number: 25195381.6
(22) Date of filing: 12.08.2025
(51) Int. Cl.: B64C 1/14, B64D 29/08, E05B 35/00

(54) **LOCKING APPARATUS FOR A SERVICE ACCESS IN AN EXTERNAL STRUCTURE OF AN AIRCRAFT, SERVICE ACCESS, AIRCRAFT AND METHOD FOR PRODUCING A LOCKING APPARATUS FOR A SERVICE ACCESS IN AN EXTERNAL STRUCTURE OF AN AIRCRAFT**

(30) Priority: 12.09.2024 DE 102024126376
(71) Applicant: Airbus Defence and Space GmbH, 82024 Taufkirchen (DE)
(72) Inventor: REINISCH, Christian, 82024 Taufkirchen (DE); PETERS, Sebastian, 82024 Taufkirchen (DE)
(74) Representative: Isarpatent

(57) **Abstract**

The present invention provides a locking apparatus for a service access in an external structure of an aircraft. In addition, the invention provides a service access having a locking apparatus of this kind, and an aircraft having a service access of this kind. The present invention furthermore provides a method for producing a locking apparatus for a service access in an external structure of an aircraft.

## Description

The present invention relates to a locking apparatus for a service access in an external structure of an aircraft and to a service access having a locking apparatus of this kind. In addition, the present invention relates to an aircraft having a service access of this kind and to a method for producing a locking apparatus for a service access in an external structure of an aircraft.

Current access panels are installed at locations in which systems, some of them under the aircraft skin, require servicing and maintenance access during the life of the aircraft. Access panels are usually provided with a door provided specifically for this purpose and with a special landing zone on the structure, on which the door is secured, with associated high tolerance requirements and additional materials in order to meet the specific requirements, e.g. the aerodynamic surface finish of the respective component. These measures are necessary since the gap around the access door and the edges that are formed would limit the performance of the aircraft, e.g. in respect of aerodynamics. In this context, the measures for obtaining the current access panels increase the production, servicing and maintenance costs for the overall product and simultaneously increase the overall weight of the aircraft structure. Moreover, there are still gaps and spaces around the access panels, especially in the region of the locking apparatus by means of which the access panels can be locked or unlocked.

Aircraft featuring stealth technology as well as regular aircraft for military use have such access panels in order, for example, to give ground personnel access to servicing systems. Depending on a frequency with which they are opened, these access panels require locking systems or locks that are accessible by means of a tool from the outside of the aircraft. The locks are supposed to compromise the stealth capabilities of the aircraft as little as possible; i.e. the surface of the aircraft should be disrupted as little as possible by irregularities.

Known locking systems for access panels have potential for improvement in terms of the tolerances, especially in respect of the gaps and spaces. CN 110017065 A, for example, describes an unmanned aerial vehicle hatch cover locking mechanism. The unmanned aerial vehicle hatch cover locking mechanism aims to achieve the purpose of recovering a stealth unmanned aerial vehicle parachute, and ensures that a stealth unmanned aerial vehicle stably and reliably opens a parachute cabin and an airbag cabin during landing, wherein the hatch cover locking mechanism is located inside an equipment cabin. CN 109930935 A furthermore describes a compound opening and closing apparatus for the vehicle cabin door. The assembled opening and closing apparatus comprises a vehicle body and a cabin door, wherein the cabin door covers the opening in the vehicle body; one end of the cabin door is connected to the vehicle body by a lifting and turning mechanism, and the other end is connected to the vehicle body by a rotary shaft turning mechanism.

It is the object of the present invention to provide a simple service access for servicing work on an aircraft, wherein high tolerance requirements are satisfied.

According to the invention, this object is achieved by the subject matter of each of the independent claims.

According to a first aspect of the invention, a locking apparatus for a service access in an external structure of an aircraft is provided. The locking apparatus comprises a base structure for fixed attachment in an opening of a service access in an external structure. The base structure has a through opening, which extends along a longitudinal axis. In addition, the locking apparatus comprises a covering device, which is supported in such a way as to be movable along the longitudinal axis in the through opening and relative to the base structure. The covering device is preloaded by a spring device and is held in a closure position by a stop means in interaction with the spring device. The locking apparatus furthermore comprises an actuating shaft, which extends along the longitudinal axis. In addition, the actuating shaft has a handling end region for rotational handling by means of a tool, and a transmission end region for transmitting a torque to a lever unit coupled to the transmission end region. The handling end region is surrounded by the covering device. The handling end region and the covering device are arranged with their surfaces flush in respect of a respective outer side.

According to a second aspect of the invention, a service access for an aircraft is provided. The service access comprises a portion of an external structure of an aircraft which can be removed nondestructively, wherein the portion has an opening. In addition, the service access has a locking apparatus according to the first aspect of the invention, wherein the base structure is attached in a fixed manner in the opening.

According to a third aspect of the invention, an aircraft having a service access according to the second aspect of the invention is provided.

According to a fourth aspect of the invention, a method for producing a locking apparatus for a service access in an external structure of an aircraft, in particular for producing a locking apparatus according to the first aspect of the invention, is provided. The method comprises the following steps:
- attaching a base structure in an opening of a service access in an external structure, wherein the base structure has a through opening, which extends along a longitudinal axis.
- inserting a spring device into the base structure, wherein the spring device is preloaded and held in position by the placement of a covering device. The covering device is supported in such a way as to be movable along the longitudinal axis in the through opening and relative to the base structure.
- connecting a stop means to the covering device, such that the covering device is held in a closure position by the spring device in interaction with the stop means.
- fitting an actuating shaft, which extends along the longitudinal axis. The actuating shaft has a handling end region for rotational handling by means of a tool, and a transmission end region for transmitting a torque to a lever unit coupled to the transmission end region, wherein the handling end region is surrounded by the covering device. The handling end region and the covering device are arranged with their surfaces flush in respect of a respective outer side.

A concept underlying the present invention consists in improving a high tolerance requirement by providing locking apparatus components that are simple to produce and easy to adjust in order to keep requirements on steps and spaces within the smallest possible limits. The longitudinal axis corresponds to a surface normal of the outer side of the service access. In the closure position, the outer side of the handling end region, the outer side of the covering device and optionally the outer side of the base structure lie substantially in one plane. This plane preferably corresponds to a plane of an outer side of the service access or the external structure. That is to say that the covering device supported so as to be movable along the longitudinal axis can furthermore be used to arrange the outer side of the covering device and the outer side of the base structure with their surfaces flush. For the purposes of this application, the term "plane" also includes curves which are insignificant in relation to the extent of a surface. The spring device can be supported on the base structure.

Owing to manufacturing tolerances and/or assembly tolerances, the flush-surface arrangement can have small steps at the transitions between adjacent components. One advantage of the present invention is that there are no steps or almost no steps between the covering device and the handling end region. By means of the covering device according to the invention in combination with the actuating shaft according to the invention, a step of this kind can be set precisely and the step provided can thus be as small as possible. It is thus possible to increase precision in the production of the locking apparatus.

Another advantage of the present invention consists in that it can be used for applications involving stealth technology since a stealth property of the aircraft can be improved by mechanical means.

Advantageous embodiments and further developments will become apparent from the dependent claims referring back to the independent claims and from the description with reference to the figures.

According to one embodiment of the invention, the covering device can be moved axially along the longitudinal axis relative to the actuating shaft by a pressure force, such that the covering device is in a manipulation position, in which the handling end region is freely accessible. The handling end region can have, for example, a slotted profile, a star-shaped profile or a polygonal profile, in particular an external square profile, an external hexagonal profile or an external octagonal profile. The actuating shaft can thus be manipulated by means of commonly available tools.

Moreover, the handling end region can have one of the abovementioned profiles for a predetermined distance in the direction of the longitudinal axis and change or transition to a cylindrical shape after the predetermined distance, wherein the cylindrical shape has a smaller diameter than an envelope curve of the handling end region. This enables the actuating shaft to be rotated relative to the covering device in the manipulation position, wherein the handling end region provided with a profile blocks the covering device in such a way that it cannot be pushed into the closure position. This makes it possible to achieve a safety function in order to allow the covering device to adopt the closure position only when the service access is fully locked, i.e. when the actuating shaft has been fully rotated. In addition, the covering device can be rotatable relative to the base structure in the manipulation position.

According to another embodiment of the invention, when considered in cross section, the covering device is of round, in particular circular, design in relation to the longitudinal axis. Thus, a space, in particular a radial space, between the covering device and the base structure can be reduced inasmuch as the required diameter of the covering device or of the cover can be turned to match the exact installation conditions by means of a lathe. In addition, it is thereby possible to relieve a tolerance chain from the locking apparatus to the service access. The covering device can be deliberately made very simple, thus making it very easy to carry out finish machining of the original overdimensioned cover in the assembly stage. This means that, as a simple and low-cost component, the covering device can be finish-machined in a simple manner, i.e. with little effort. Moreover, the actuating shaft and the covering device of round design can be arranged coaxially.

According to another embodiment of the invention, the locking apparatus further has a housing, which is arranged on an inner side of the service access and rotatably supports the actuating shaft. Here, the housing can enclose the base structure, the covering device and the stop means at least partially on the inner side of the service access or the external structure.

According to another embodiment of the invention, the spring device is designed as a compression spring, in particular as a conical compression spring. The compression spring or conical compression spring can be arranged coaxially with the covering device. That is to say the compression spring or conical compression spring can radially surround the covering device or can be surrounded radially by the covering device. The conical compression spring can be compressed in a very space-saving manner.

As an option, the covering device can be supported in the base structure by means of a sliding bush.

According to another embodiment of the invention, the stop means is screwed to the covering device by means of a threaded joint, wherein the closure position can be adjusted along the longitudinal axis by means of the threaded joint. In this way, it is possible to adjust a position of the covering device along the longitudinal axis in order to provide the outer side of the locking apparatus as far as possible without steps in relation to the service access. This means that a step can be adjusted during assembly by screwing in or screwing out the stop means. Advantageously, no tool is required here. In this case, the threaded joint can have a very small thread pitch in order to allow very precise adjustment.

To secure the stop means against unintentional rotation, the stop means can have a recess, which can interlock with a projection on the base structure. As an option, the projection and the recess can be designed and dimensioned in such a way that they do not interlock in the manipulation position. This enables the covering device to be rotated relative to the base structure by means of the threaded joint in the manipulation position. Once the best closure position has been found, the threaded joint can be secured by means of a retaining wire, an adhesive or the like.

According to another embodiment of the invention, the base structure is designed as a bush. The bush can be cylindrical, in particular rotationally symmetrical, for example. In addition, the base structure and the covering device and/or the actuating shaft can be arranged coaxially. Moreover, the bush can be pressed in, adhesively bonded or attached in a comparable materially integral and/or force-locking way in the opening. For example, the base structure can be attached with its surface flush in relation to an outer side of the covering device, such that an outer side of the service access has no raised area.

The base structure, the covering device, the actuating shaft and the optional housing can each be produced independently of one another, e.g. from a light metal, in particular from aluminium, or a fibre composite material, in particular carbon-fibre-reinforced plastic.

According to another embodiment of the invention, the transmission end region is coupled to a lever unit. In this case, the lever unit can be connected to the transmission end region by form-locking and/or force-locking, e.g. by means of a screwed joint. In addition, the lever unit can comprise a linkage, which actuates one or more unlocking mechanisms or locking mechanisms, thus enabling the service access to be unlocked or locked.

According to another embodiment of the invention, during the fitting of the actuating shaft, a housing is installed on an inner side of the service access and the actuating shaft is pushed in through a feed hole in the covering device. Here, the housing can enclose the base structure, the covering device and the stop means at least partially on the inner side of the service access or the external structure. In particular, the feed hole can correspond to a cross section of the handling end region.

According to another embodiment of the invention, the actuating shaft is pushed through a sliding bearing bush of the housing until a first retention ring pre-installed on the actuating shaft comes into contact with the sliding bearing bush. An axial position of the actuating shaft can be secured by means of a second retention ring, which is mounted on a side of the sliding bearing bush facing away from the first retention ring after the actuating shaft has been inserted into the sliding bearing bush.

According to another embodiment of the invention, the method furthermore comprises a step of adjusting the closure position to minimize a step between the covering device and the handling end region or between the covering device and the base structure in relation to the respective outer side, wherein the closure position is adjusted along the longitudinal axis by means of a threaded joint. In this way, it is possible to adjust a position of the covering device along the longitudinal axis in order to provide the outer side of the locking apparatus as far as possible without steps in relation to the service access. This means that a step can be adjusted during assembly by screwing in or screwing out the stop means. Advantageously, no tool is required here. In this case, the threaded joint can have a very small thread pitch in order to allow very precise adjustment.

To secure the stop means against unintentional rotation, the stop means can have a recess, which can interlock with a projection on the base structure. As an option, the projection and the recess can be designed and dimensioned in such a way that they do not interlock in the manipulation position. This enables the covering device to be rotated relative to the base structure by means of the threaded joint in the manipulation position. Depending on the number of projections and recesses, the stop means can be rotated relative to the covering device by, for example, 45°, 90°, 135° or 180° in order to enable interlocking between the projections and recesses.

Alternatively or in addition, the covering device can be rotated relative to the actuating shaft, in particular, depending on the polygonal profile of the handling end region, by 45° in the case of an external hexagonal profile or by 90° in the case of an external square profile for example, to avoid blocking the handling end region provided with the profile. Once the best closure position has been found, the threaded joint can be secured by means of a retaining wire, an adhesive or the like.

As an option, the covering device can be supported in the base structure by means of a sliding bush, which is pre-installed in the base structure.

According to another embodiment of the invention, the method furthermore comprises a step of coupling the transmission end region to a lever unit. In this case, the lever unit can be connected to the transmission end region by form-locking and/or force-locking, e.g. by means of a screwed joint. In addition, the lever unit can comprise a linkage, which actuates one or more unlocking mechanisms or locking mechanisms, thus enabling the service access to be unlocked or locked.

For example, the locking apparatus can be unlocked or opened by means of the following steps. A tool with a square recess presses the covering device or the cover, together with the screwed-on lock washer or stop means, from the outer side in the direction of the inner side of the locking apparatus until the outer side or cover surface of the covering device is pushed beyond the handling end region, designed as a square, of the actuating shaft or drive shaft. As a result, the axis of rotation of the actuating shaft, i.e. a rotation of the actuating shaft around the longitudinal axis, is free, and the drive shaft, together with the first and the second retention ring and the lever unit or the output lever, can be rotated clockwise or anticlockwise. The lever unit or output lever can be connected to the one or more unlocking mechanisms or opening mechanisms and locking mechanisms or closing mechanisms, e.g. a bell crank lever. Closing or locking the service access by means of the locking apparatus can be effected by a reverse sequence of the steps described above.

The above embodiments and further developments can be combined with one another in any way desired, insofar as this is worthwhile. Further possible embodiments, further developments and implementations of the invention also comprise combinations, not explicitly mentioned, of features of the invention which are described above or below in relation to the exemplary embodiments. In particular, a person skilled in the art will also add individual aspects as improvements or supplementary features to the respective basic form of the present invention.

The present invention is explained in greater detail below by means of exemplary embodiments with reference to the appended figures of the drawings. Of the figures:
- Fig. 1: shows a schematic illustration of a locking apparatus for a service access in an external structure of an aircraft according to one exemplary embodiment of the invention;
- Fig. 2: shows a schematic sectional view of a segment of a service access for an aircraft having a locking apparatus for the service access in an external structure of the aircraft according to another exemplary embodiment of the invention;
- Fig. 3: shows a schematic perspective view of the base structure of the locking apparatus from Fig. 2;
- Fig. 4: shows a schematic perspective view of the covering device of the locking apparatus from Fig. 2;
- Fig. 5: shows a schematic perspective view of the stop means of the locking apparatus from Fig. 2;
- Fig. 6: shows a schematic side view of an aircraft having a service access according to another exemplary embodiment of the invention; and
- Fig. 7: shows a flow diagram of a method for producing a locking apparatus for a service access in an external structure of an aircraft according to another exemplary embodiment of the invention.

In the figures of the drawing, elements, features and components that are the same, functionally the same and have the same effect are each provided with the same reference signs, unless stated to the contrary.

Although in the present case specific embodiments and further developments are illustrated and described, the specific exemplary embodiments illustrated and described can be replaced by a large number of alternative and/or similar embodiments according to the preference of a person skilled in the art, without departing from the scope of the present invention. This application is intended in general to cover all modifications or changes to the specific exemplary embodiments described herein.

The appended figures are intended to impart greater understanding of embodiments of the invention and are used to explain principles and concepts of the invention in conjunction with the description. Other exemplary embodiments and many of the advantages mentioned will be apparent from viewing the drawings. The drawings should be interpreted merely as schematic drawings, and the elements of the drawings are not necessarily illustrated to scale relative to one another. Terminology that indicates directions, such as "top", "bottom", "left", "right", "above", "below", "horizontal", "vertical", "front", "rear" and similar indications are used purely for explanatory purposes and are not used to limit the general scope to specific configurations such as those shown in the figures.

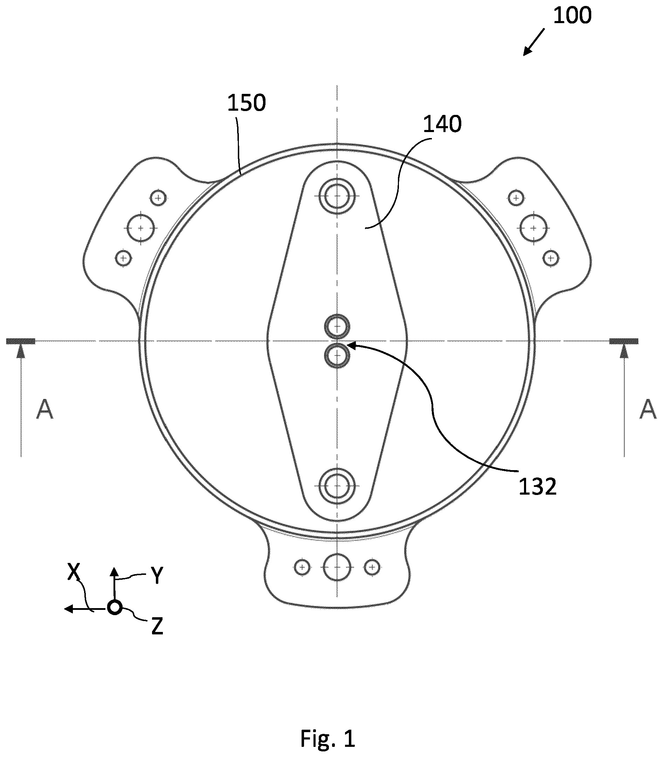

Fig. 1 shows a schematic illustration of a locking apparatus 100 for a service access in an external structure of an aircraft according to one exemplary embodiment of the invention.

By way of example, the locking apparatus 100 comprises a base structure for fixed attachment in an opening of a service access in an external structure, wherein the base structure has a through opening, which extends along a longitudinal axis Z. In addition, the locking apparatus 100 comprises a covering device, which is supported in such a way as to be movable along the longitudinal axis Z in the through opening and relative to the base structure. The covering device is preloaded by a spring device and is held in a closure position by a stop means in interaction with the spring device. Here, the longitudinal axis Z extends out of the plane of the drawing and is at a right angle to the transverse axes X and Y.

Moreover, the locking apparatus 100 comprises an actuating shaft, which extends along the longitudinal axis Z, a handling end region for rotational handling by means of a tool, and a transmission end region 132 for transmitting a torque to a lever unit 140 coupled to the transmission end region 132, wherein the handling end region is surrounded by the covering device. The handling end region and the covering device are arranged with their surfaces flush in respect of a respective outer side.

Furthermore, the locking apparatus 100 can have a housing 150, which is arranged on an inner side of the service access and rotatably supports the actuating shaft. Here, the housing 150 can enclose the base structure, the covering device and the stop means at least partially on the inner side of the service access or the external structure. As an option, the housing 150 can have holes to enable it to be screwed to the external structure, for example. Alternatively or in addition, the housing 150 can be connected materially to the base structure or the external structure.

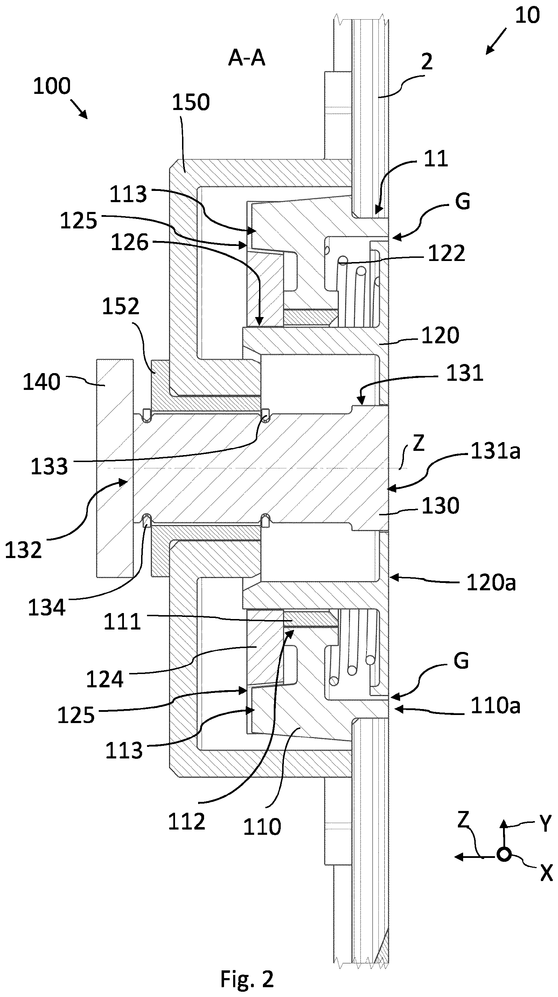

Fig. 1 also illustrates a section axis A-A, the sectional view of which corresponds to the sectional view in Fig. 2.

Fig. 2 shows a schematic sectional view of a segment of a service access 10 for an aircraft having a locking apparatus 100 for the service access 10 in an external structure 2 of the aircraft according to another exemplary embodiment of the invention.

The service access 10 comprises a portion of the external structure 2 which can be removed nondestructively, wherein the portion has an opening 11.

The service access 10 furthermore comprises the locking apparatus 100, which, by way of example, has a base structure 110, a covering device 120, a spring device 122, a stop means 124, an actuating shaft 130, a lever unit 140 and a housing 150.

The base structure 110 is attached in a fixed manner in the opening 11 of the service access 10. Here, the base structure 110 has a through opening 112, which extends along a longitudinal axis Z. The longitudinal axis Z corresponds to a surface normal of the outer side of the service access 10, for example.

The covering device 120 is supported in such a way as to be movable along the longitudinal axis Z in the through opening 112 and relative to the base structure 110. As an option, the covering device 120 can be supported in the base structure 110 by means of a sliding bush 111, as illustrated by way of example in Fig. 2. The covering device 120 is preloaded by the spring device 122 and is held in a closure position by the stop means 124 in interaction with the spring device 122. In Fig. 2, the covering device 120 is illustrated in the closure position.

For example, the covering device 120 can be of round design in relation to the longitudinal axis Z when considered in cross section. Thus, a space G, in particular a radial space G, between the covering device 120 and the base structure 110 can be reduced inasmuch as the required diameter of the covering device 120 or of the cover can be turned to match the exact installation conditions by means of a lathe.

The covering device 120 can be deliberately made very simple, thus making it very easy to carry out finish machining of the original overdimensioned cover in the assembly stage. Moreover, the actuating shaft 130 and the covering device 120 of round design can be arranged coaxially.

The spring device 122 can be designed as a conical compression spring, for example, but is not limited to this configuration: on the contrary, it may also be any other compression spring. The conical compression spring 122 can be arranged coaxially with the covering device 120. That is to say that the conical compression spring 122 can radially surround the covering device 120. The conical compression spring 122 can be compressed in a very space-saving manner.

The actuating shaft 130 extends along the longitudinal axis Z. The actuating shaft 130 has a handling end region 131 for rotational handling by means of a tool, and a transmission end region 132 for transmitting a torque to the lever unit 140 coupled to the transmission end region 132. The handling end region 131 is surrounded by the covering device 120. The handling end region 131 and the covering device 120 are arranged with their surfaces flush in respect of a respective outer side 120a, 131a.

In the closure position, the outer side 131a of the handling end region 131, the outer side 120a of the covering device 120 and the outer side 110a of the base structure 110 lie substantially in one plane, for example. This plane preferably corresponds to a plane of an outer side of the service access 10 or the external structure 2. That is to say that the covering device supported so as to be movable along the longitudinal axis Z can furthermore be used to arrange the outer side 120a of the covering device 120 and the outer side 110a of the base structure 110 with their surfaces flush.

For example, the covering device 120 can be moved axially along the longitudinal axis Z relative to the actuating shaft 130 by a pressure force, such that the covering device 120 is in a manipulation position, in which the handling end region 131 is freely accessible. Thus, in Fig. 2, the covering device 120 can be pushed to the left. The handling end region 131 can have, for example, a polygonal profile, in particular an external square profile, an external hexagonal profile or an external octagonal profile, but is not limited thereto. The actuating shaft 130 can thus be manipulated by means of commonly available tools.

Moreover, the handling end region 131 can have the polygonal profile for a predetermined distance in the direction of the longitudinal axis Z and change or transition to a cylindrical shape after the predetermined distance, as illustrated by way of example in Fig. 2. Here, the cylindrical shape can have a smaller diameter than an envelope curve of the handling end region 131. This enables the actuating shaft 130 to be rotated relative to the covering device 120 in the manipulation position, wherein the handling end region 131 provided with a profile blocks the covering device 120 in such a way that it cannot be pushed into the closure position. This makes it possible to achieve a safety function in order to allow the covering device 120 to adopt the closure position only when the service access 10 is fully locked, i.e. when the actuating shaft 130 has been fully rotated. In addition, the covering device 120 can be rotatable relative to the base structure 110 in the manipulation position.

The housing 150 can be arranged on an inner side of the service access 10 and rotatably support the actuating shaft 130. Here, the housing 150 can enclose the base structure 110, the covering device 120 and the stop means 124 at least partially on the inner side of the service access 10 or the external structure 2. As an option, the actuating shaft 130 can be supported in a sliding bearing bush 152, for example, wherein a first retention ring 133 pre-installed on the actuating shaft 130 and a second retention ring 134 mounted on a side of the sliding bearing bush 152 facing away from the first retention ring 133 fix the actuating shaft 130 axially.

The stop means 124 can be screwed to the covering device 120 by means of a threaded joint 126, wherein the closure position can be adjusted along the longitudinal axis Z by means of the threaded joint 126. In this way, it is possible to adjust a position of the covering device 120 along the longitudinal axis Z, that is to say to the right or left in the illustration in Fig. 2, in order to provide the outer side 110a, 120a, 131a of the locking apparatus 100 as far as possible without steps in relation to the service access 10. This means that a step can be adjusted during assembly by screwing in or screwing out the stop means 124.

To secure the stop means 124 against unintentional rotation, the stop means 124 can have a recess 125, which can interlock with a projection 113 on the base structure 110, as illustrated by way of example in Fig. 2. As an option, the projection 113 and the recess 125 can be designed and dimensioned in such a way that they do not interlock in the manipulation position. This enables the covering device 120 to be rotated relative to the base structure 110 by means of the threaded joint 126 in the manipulation position.

The transmission end region 132 can be coupled to the lever unit 140. In this case, the lever unit 140 can be connected to the transmission end region 132 by form-locking and/or force-locking, e.g. by means of a screwed joint. In addition, the lever unit 140 can comprise a linkage (not illustrated), which actuates one or more unlocking mechanisms or locking mechanisms, thus enabling the service access 10 to be unlocked or locked.

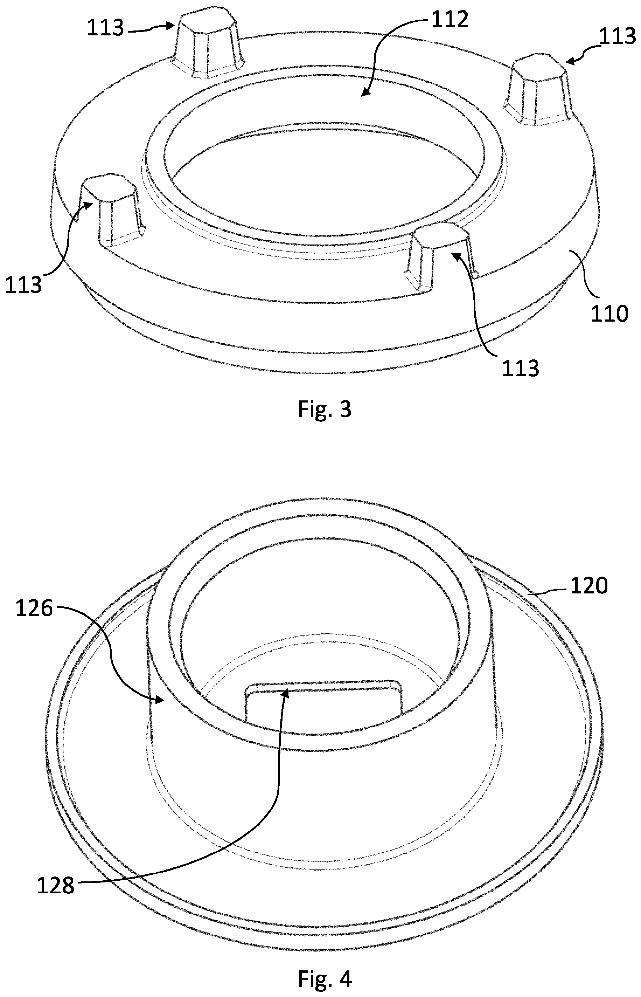

Fig. 3 shows a schematic perspective view of the base structure 110 of the locking apparatus 100 from Fig. 2.

The base structure 110 can be designed as a bush, for example. The bush 110 can be cylindrical, for example. In addition, the base structure 110 and the covering device 120 and the actuating shaft 130 can be arranged coaxially. Moreover, the bush 110 can be pressed in, adhesively bonded or attached in a comparable materially integral and/or force-locking way in the opening 11. For example, the base structure 110 can be attached with its surface flush in relation to the outer side 120a of the covering device 120, such that an outer side of the service access 10 has no raised area. In addition, the base structure 110 can have a through opening 112.

For example, the base structure 110 can have a multiplicity, in particular an even number, of projections 113. The multiplicity of projections 113 can comprise two, three, four, five, six or eight projections 113. In this case, the projections 113 themselves can each be of identical design. Irrespective of the number of projections 113, the projections 113 can be arranged in a manner uniformly distributed over a circumference of the base structure 110. In Fig. 3, by way of example, the base structure comprises four projections 113, which are arranged in a manner uniformly distributed over the circumference.

Fig. 4 shows a schematic perspective view of the covering device 120 of the locking apparatus 100 from Fig. 2.

When considered in cross section, the covering device 120 can be of circular design, for example, in relation to the longitudinal axis Z. The covering device 120 can be deliberately made very simple, thus making it very easy to carry out finish machining of the original overdimensioned cover in the assembly stage. This means that, as a simple and low-cost component, the covering device 120 can be finish-machined in a simple manner, i.e. with little effort. Moreover, the actuating shaft 130 and the covering device 120 of round design can be arranged coaxially.

For example, the covering device 120 can have a mushroom-like outer contour. Alternatively or in addition, the covering device 120 can have a feed hole 128. The feed hole 128 can be arranged coaxially with an axis of rotation of the covering device 120, for example. In this case, the shape of the feed hole 128 can correspond to the outer contour of the handling end region 131.

Moreover, the covering device 120 can have a thread for the threaded joint 126 on a lateral surface.

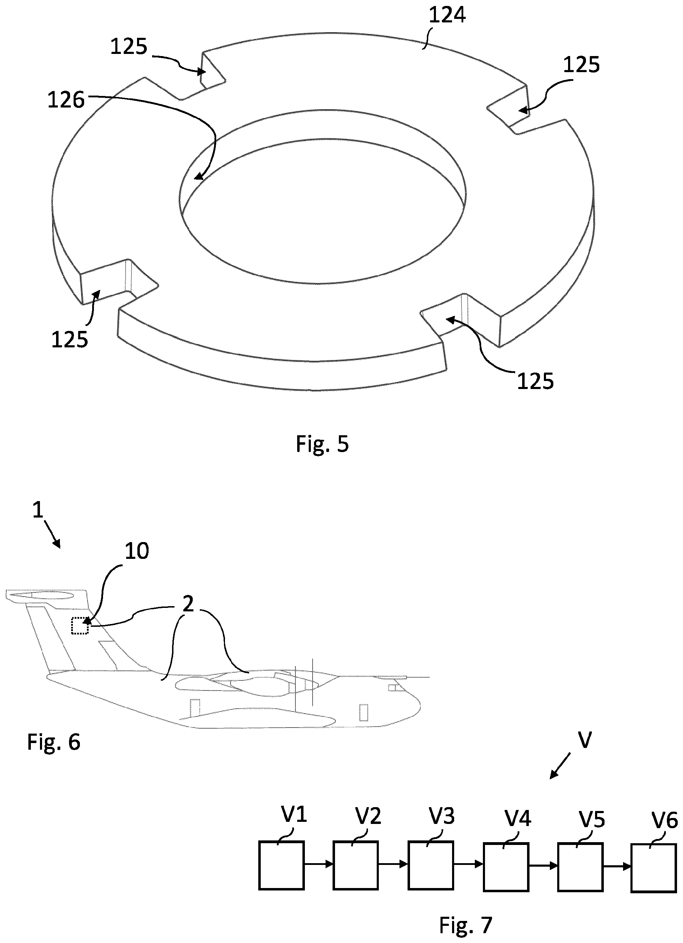

Fig. 5 shows a schematic perspective view of the stop means 124 of the locking apparatus 100 from Fig. 2.

The stop means 124 can have a multiplicity, in particular an even number, of recesses 125. The multiplicity of recesses 125 is designed, in particular, to interlock with the multiplicity of projections 113 on the base structure 110. As an option, the projections 113 and the recesses 125 can each be designed and dimensioned in such a way that they do not interlock in the manipulation position. This enables the covering device 120 to be rotated relative to the base structure 110 by means of the threaded joint 126 in the manipulation position.

The multiplicity of recesses 125 can comprise two, three, four, five, six or eight recesses 125. In this case, the recesses 125 themselves can each be of identical design. Irrespective of the number of recesses 125, the recesses 125 can be arranged in a manner uniformly distributed over a circumference of the stop means 124. In Fig. 5, by way of example, the stop means 124 comprises four recesses 125, which are arranged in a manner uniformly distributed over the circumference.

Moreover, the stop means 124 can have a thread for the threaded joint 126 on an inner lateral surface.

Fig. 6 shows a schematic side view of an aircraft 1 having a service access 10 according to another exemplary embodiment of the invention.

By way of example, the external structure 2 is designed as a wing, a fuselage, a nacelle, a tailplane or the like.

Fig. 7 shows a flow diagram of a method V for producing a locking apparatus 100 for a service access 10 in an external structure 2 of an aircraft 1 according to another exemplary embodiment of the invention.

By way of example, the method V comprises a step of attaching V1 a base structure 110, a step of inserting V2 a spring device 122 into the base structure 110, a step of connecting V3 a stop means 124, a step of fitting V4 an actuating shaft 130, an optional step of adjusting V5 the closure position, and an optional step of coupling V6 the transmission end region 132 to a lever unit 140.

In the step of attaching V1, a base structure 110 is attached in an opening 11 of a service access 10 in the external structure 2, wherein the base structure 110 has a through opening 112, which extends along a longitudinal axis Z.

In the step of inserting V2, a spring device 122 is inserted into the base structure 110, wherein the spring device 122 is preloaded and held in position by the placement of a covering device 120. In this case, the covering device 120 is supported in such a way as to be movable along the longitudinal axis Z in the through opening 112 and relative to the base structure 110. As an option, the covering device 120 can be supported in the base structure 110 by means of a sliding bush 111, which is pre-installed in the base structure.

In the step of connecting V3, a stop means 124 is connected to the covering device 120, such that the covering device 120 is held in a closure position by the spring device 122 in interaction with the stop means 124.

In the step of fitting V4, an actuating shaft 130 is fitted, which extends along the longitudinal axis Z, a handling end region 131 for rotational handling by means of a tool, and a transmission end region 132 for transmitting a torque to a lever unit 140 coupled to the transmission end region 132. For example, the actuating shaft 130 can be pushed through a sliding bearing bush 152 of the housing 150 until a first retention ring 133 pre-installed on the actuating shaft 130 comes into contact with the sliding bearing bush 152. An axial position of the actuating shaft 130 can be secured by means of a second retention ring 134, which is mounted on a side of the sliding bearing bush 152 facing away from the first retention ring 133 after the actuating shaft 130 has been inserted into the sliding bearing bush 152. The handling end region 131 is surrounded by the covering device 120. The handling end region 131 and the covering device 120 are arranged with their surfaces flush in respect of a respective outer side 120a, 131a.

During the fitting V4 of the actuating shaft, a housing 150 can furthermore be installed on an inner side of the service access 10 and the actuating shaft 130 can be pushed in through a feed hole 128 in the covering device 120. Here, the housing 150 can enclose the base structure 110, the covering device 120 and the stop means 124 at least partially on the inner side of the service access 10 or the external structure. In particular, the feed hole 128 can correspond to a cross section of the handling end region 131.

In the optional step of adapting V5, the closure position can be adjusted to minimize a step between the covering device 120 and the handling end region 131 or between the covering device 120 and the base structure 110 in relation to the respective outer side 110a, 120a, 131a. The closure position is adjusted along the longitudinal axis Z by means of a threaded joint 126. In this way, it is possible to adjust a position of the covering device 120 along the longitudinal axis Z in order to provide the outer side of the locking apparatus as far as possible without steps in relation to the service access 10. This means that a step can be adjusted during assembly by screwing in or screwing out the stop means 124.

To secure the stop means 124 against unintentional rotation, the stop means can have a recess, which can interlock with a projection on the base structure. As an option, the projection and the recess can be designed and dimensioned in such a way that they do not interlock in the manipulation position. This enables the covering device to be rotated relative to the base structure by means of the threaded joint in the manipulation position. Depending on the number of projections 113 and recesses 125, the stop means 124 can be rotated relative to the covering device 120 by, for example, 45°, 90°, 135° or 180° in order to enable interlocking between the projections 113 and recesses 125.

Alternatively or in addition, the covering device 120 can be rotated relative to the actuating shaft 130, in particular depending on the polygonal profile of the handling end region 131, by 45° in the case of an external hexagonal profile or by 90° in the case of an external square profile for example, to avoid blocking the handling end region 131 provided with the profile. Once the best closure position has been found, the threaded joint 126 can be secured by means of a retaining wire, an adhesive or the like.

In the optional step of coupling V6, the transmission end region 132 can be coupled to a lever unit 140. In this case, the lever unit 140 can be connected to the transmission end region 132 by form-locking and/or force-locking, e.g. by means of a screwed joint. In addition, the lever unit 140 can comprise a linkage, which actuates one or more unlocking mechanisms or locking mechanisms, thus enabling the service access to be unlocked or locked.

After the application of steps V1 to V6, the locking apparatus 100 can be present as shown and described by way of example in Fig. 2.

In the preceding detailed description, various features for improving the conciseness of the explanation have been combined in one or more examples. However, it should at the same time be clear that the above description is of a merely illustrative and in no way restrictive nature. It serves to cover all the alternatives, modifications and equivalents of the various features and exemplary embodiments. Many other examples will be immediately and directly clear to those skilled in the art on the basis of their technical knowledge when considering the above description.

The exemplary embodiments were chosen and described in order to be able to explain as well as possible the principles underlying the invention and their possible applications in practice. This will enable those skilled in the art to modify and use the invention and its various exemplary embodiments in an optimum way with regard to the intended application. In the claims and the description, the terms "containing" and "having" are used as neutral verbal expressions for the corresponding term "comprising". Moreover, use of the terms "a" and "an" is not intended in principle to rule out a plurality of features and components described in this way.

For example, the present invention is not restricted to the use of aerodynamic external structures but can likewise be applied to conventional external structures and access flaps provided therein.

### List of reference signs

- 1: aircraft
- 2: external structure
- 10: service access
- 11: opening
- 100: aircraft
- 110: base structure
- 110a: outer side of the base structure
- 111: sliding bush
- 112: through opening
- 113: projection
- 120: covering device
- 120a: outer side of the covering device
- 122: spring device
- 124: stop means
- 125: recess
- 126: threaded joint
- 128: feed hole
- 130: actuating shaft
- 131: handling end region
- 131a: outer side of the handling end region
- 132: transmission end region
- 133: first retention ring
- 134: second retention ring
- 140: lever unit
- 150: housing
- 152: sliding bearing bush

- G: space between covering device and base structure
- X, Y: transverse axis
- Z: longitudinal axis

- V: method
- V1: attaching
- V2: inserting
- V3: connecting
- V4: fitting
- V5: adjusting
- V6: coupling

## Claims

1. Locking apparatus (100) for a service access (10) in an external structure (2) of an aircraft (1), the locking apparatus (100) having:
a base structure (110) for fixed attachment in an opening (11) of a service access (10) in an external structure (2), wherein the base structure (110) has a through opening (112), which extends along a longitudinal axis (Z);
a covering device (120), which is supported in such a way as to be movable along the longitudinal axis (Z) in the through opening (112) and relative to the base structure (110), wherein the covering device (120) is preloaded by a spring device (122) and is held in a closure position by a stop means (124) in interaction with the spring device (122); and
an actuating shaft (130), which extends along the longitudinal axis (Z), has a handling end region (131) for rotational handling by means of a tool, and a transmission end region (132) for transmitting a torque to a lever unit (140) coupled to the transmission end region (132), wherein the handling end region (131) is surrounded by the covering device (120), and wherein the handling end region (131) and the covering device (120) are arranged with their surfaces flush in respect of a respective outer side (120a, 131a).

2. Locking apparatus (100) according to Claim 1, wherein the covering device (120) can be moved axially along the longitudinal axis (Z) relative to the actuating shaft (130) by a pressure force, such that the covering device (120) is in a manipulation position, in which the handling end region (131) is freely accessible.

3. Locking apparatus (100) according to Claim 1 or 2, wherein, when considered in cross section, the covering device (120) is of round, in particular circular, design in relation to the longitudinal axis (Z).

4. Locking apparatus (100) according to one of the preceding claims, further having a housing (150), which is arranged on an inner side of the service access (10) and rotatably supports the actuating shaft (130).

5. Locking apparatus (100) according to one of the preceding claims, wherein the spring device (122) is designed as a compression spring, in particular as a conical compression spring.

6. Locking apparatus (100) according to one of the preceding claims, wherein the stop means (124) is screwed to the covering device (120) by means of a threaded joint (126), wherein the closure position can be adjusted along the longitudinal axis (Z) by means of the threaded joint (126).

7. Locking apparatus (100) according to one of the preceding claims, wherein the base structure (110) is designed as a bush.

8. Locking apparatus (100) according to one of the preceding claims, wherein the transmission end region (132) is coupled to a lever unit (140).

9. Service access (10) for an aircraft (1), the service access (10) having:
a portion of an external structure (2) of an aircraft (1) which can be removed nondestructively, wherein the portion has an opening (11); and
a locking apparatus (100) according to one of the preceding claims, wherein the base structure (110) is attached in a fixed manner in the opening (11).

10. Aircraft (1) having a service access (10) according to Claim 9.

11. Method (V) for producing a locking apparatus for a service access in an external structure (2) of an aircraft (1), in particular for producing a locking apparatus (100) according to one of Claims 1 to 8, the method (V) comprising:
attaching (V1) a base structure (110) in an opening (11) of a service access (10) in an external structure (2), wherein the base structure (110) has a through opening (112), which extends along a longitudinal axis (Z);
inserting (V2) a spring device (122) into the base structure (110), wherein the spring device (122) is preloaded and held in position by the placement of a covering device (120), wherein the covering device (120) is supported in such a way as to be movable along the longitudinal axis (Z) in the through opening (112) and relative to the base structure (110);
connecting (V3) a stop means (124) to the covering device (120), such that the covering device (120) is held in a closure position by the spring device (122) in interaction with the stop means (124); and
fitting (V4) an actuating shaft (130), which extends along the longitudinal axis (Z), has a handling end region (131) for rotational handling by means of a tool, and a transmission end region (132) for transmitting a torque to a lever unit (140) coupled to the transmission end region (132), wherein the handling end region (131) is surrounded by the covering device (120), and wherein the handling end region (131) and the covering device (120) are arranged with their surfaces flush in respect of a respective outer side (120a, 131a).

12. Method (V) according to Claim 11, wherein, during the fitting (V4) of the actuating shaft, a housing (150) is installed on an inner side of the service access (10) and the actuating shaft (130) is pushed in through a feed hole (128) in the covering device (120).

13. Method (V) according to Claim 11 or 12, wherein the actuating shaft (130) is pushed through a sliding bearing bush (152) of the housing (150) until a first retention ring (133) pre-installed on the actuating shaft (130) comes into contact with the sliding bearing bush (152).

14. Method (V) according to one of Claims 11 to 13, further comprising adjusting (V5) the closure position to minimize a step between the covering device (120) and the handling end region (131) or between the covering device (120) and the base structure (110) in relation to the respective outer side (110a, 120a, 131a), wherein the closure position is adjusted along the longitudinal axis (Z) by means of a threaded joint (126).

15. Method (V) according to one of Claims 11 to 14, further comprising coupling (V6) the transmission end region (132) to a lever unit (140).
